# EUROPEAN PATENT SPECIFICATION

(11) **EP 1 462 235 B1**
(45) Date of publication and mention of the grant of the patent: **31.08.2011**
(21) Application number: 02783698.0
(22) Date of filing: 29.11.2002
(51) Int. Cl.: B29C 47/40, B29C 47/48, B29C 47/38

(54) **EXTRUDER**
EXTRUDER
EXTRUDEUSE

(30) Priority: 30.11.2001 JP 2001366879
(43) Date of publication of application: 29.09.2004
(73) Proprietor: Sawa, Kohei, Osaka-shi Osaka 536-0023 (JP)
(72) Inventor: Sawa, Kohei, Osaka-shi Osaka 536-0023 (JP)
(74) Representative: Eisenführ, Speiser & Partner
(86) International application number: PCT/JP2002/012491
(87) International publication number: WO 2003/045664

(56) References cited:
- EP-A2- 1 063 075
- DE-A1- 10 357 578
- GB-A- 1 033 669
- JP-A- 6 031 725
- JP-A- 61 035 775
- JP-A- 61 242 822
- JP-A- 62 286 708
- SU-A1- 1 199 625
- US-A- 2 508 495
- US-A- 2 802 238
- US-A- 3 525 124
- US-A- 4 131 371
- US-A- 5 716 159

## Description

### TECHNICAL FIELD

The present invention relates to an extruder for kneading and extruding a material through rotation of screws.

### BACKGROUND ART

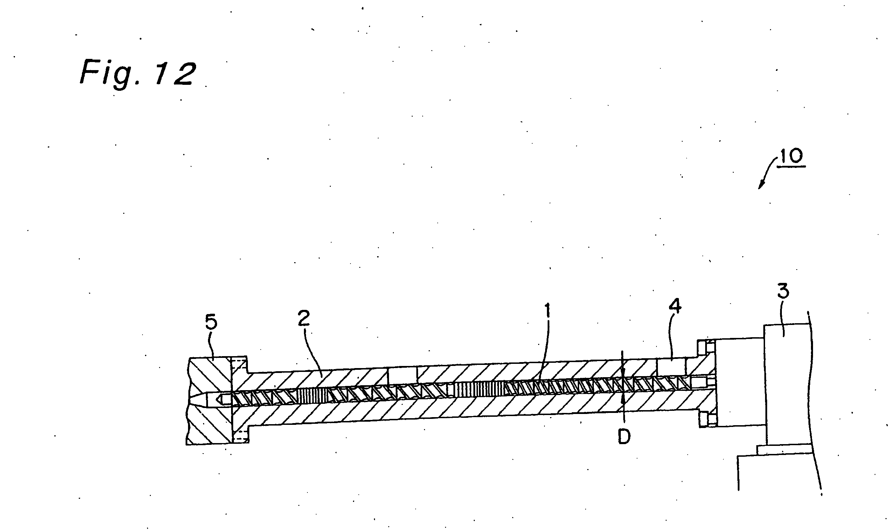

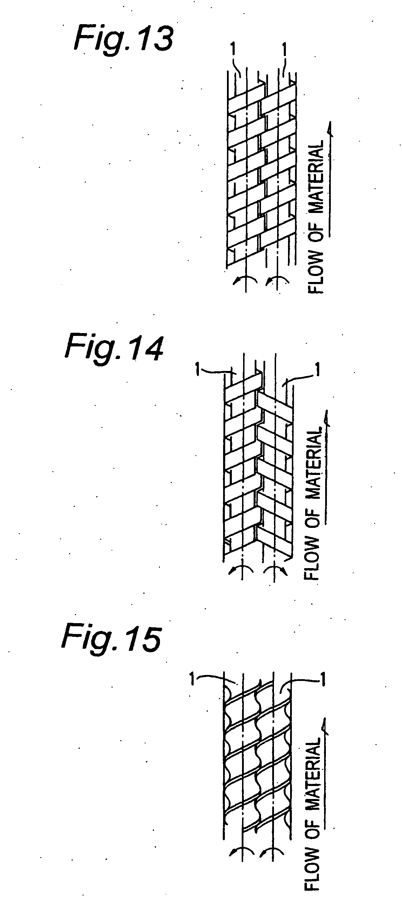

As is shown in Fig. 12, there exists an extruder 10, which extrudes a material supplied from a material inlet port 4 to a die part 5 by rotating a screw 1 inserted in a barrel 2 that corresponds to a housing and has a heater thereat by a driving part 3, the extruder 10 transferring while heating and kneading the material in the barrel 2 (for example, with reference to a cited document 1: published specification of Japanese Patent Laid-Open No. 5-50424). As the extruder 10 in this configuration, there are a type having one screw 1 and another type having two screws 1. The twin-screw type with two screws 1 meshed with each other is divided to one in which each screw 1 rotates in the same direction as shown in Figs. 13 and 15, and one in which each screw rotates in a different direction as shown in Fig. 14. Also with respect to a shape of the screw 1, there are a trapezoidal screw shape as indicated in Figs. 13 and 14, and a waveform screw shape as indicated in Fig. 15 other than the trapezoidal screw shape.

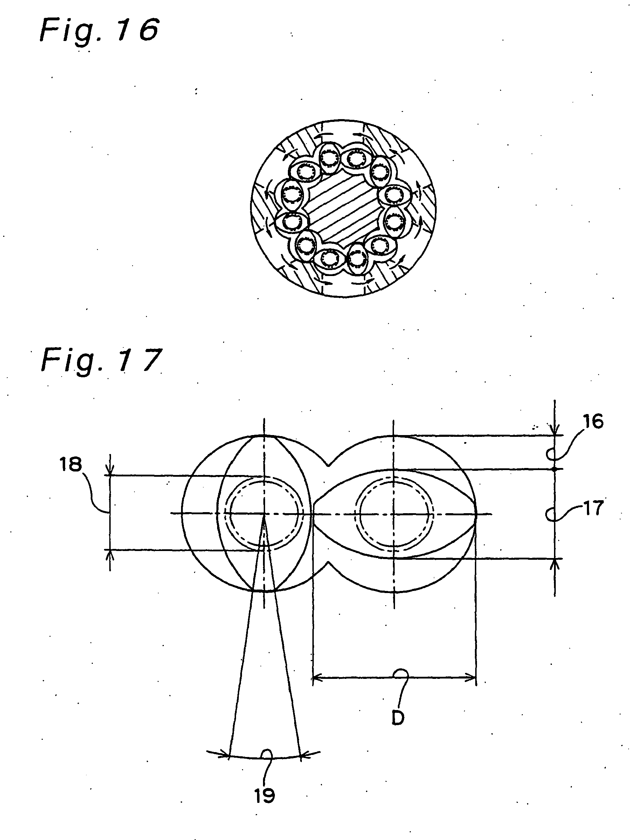

Furthermore, there are extruders having three or more screws. These extruders are constructed in such forms that many screws are arranged circumferentially as indicated in Fig. 16, two sets each consisting of mutually engaged two screws are separately arranged while the screws are not engaged with each other between the sets, and each screw in the same set rotates in the same direction while the screws are made to rotate in different directions between different sets. Conventionally no extruder is present in which three or more the aforementioned waveform screws are arranged horizontally and meshed with each other to rotate in the same direction.

For the twin-screw extruder with two screws engaged as above, an increase of the quantity of the material to be extruded, that is, an increase of the treatment volume is required. To cope with this, in Fig. 17, a diameter D of the screw 1 is increased and moreover, a root diameter 17 of the screw 1 is decreased, in other words, a depth 16 of thread grooves of the screw 1 is made larger regardless of the rotation direction and the shape of the screw in the conventional art. Here, "to increase the screw diameter" is taken for the case that the screw diameter exceeds approximately 90 mm.

However, to increase the screw diameter results in an elongated facility length, and also an increase of a mechanical loss and an increase of a driving current of the screw due to a large rotation weight of the screw or the like. Moreover, since the barrel shape is enlarged as well, it takes time for the heater to raise temperatures. When a large screw is designed, normally, a sectional shape of the large screw is made geometrically similar to a sectional shape of a small screw, and a value of L/D which is a ratio of a screw outer circumference moving distance when the screw rotates once and a groove depth of the screw is made constant. Under this condition, a peripheral velocity at the large screw is turned faster as compared with the small screw, whereby a self-heating value because of kneading of the material present in thread grooves of the screw is increased and the material is degraded. Furthermore, the above speeding up of the peripheral velocity necessitates considerations to abrasion of the screw and the barrel.

Meanwhile, to increase the groove depth of the screw 1 makes a flight angle 19 of the screw denoted in Fig. 17 smaller. This reduction of the flight angle 19 decreases an abrasion resistance of the screw 1, and at the same time increases a leak amount of the material from the screw 1. Since a shaft diameter 18 of the screw 1 is reduced when the groove depth 16 of the screw 1 is increased, it brings about the problem in terms of a strength of the screw 1.

Taking the above problem into consideration, to increase the screw diameter, that is, to increase the groove depth for increasing the treatment volume is not necessarily a good way. In general, when an extruder with a large diameter screw is to be designed, experiments are carried out with the use of an experimental extruder with a small diameter screw, and a mix proportion of materials to be treated, a screw shape and the like at the actual machine with the large diameter screw are determined on the basis of the acquired empirical data. However, it is the reality that the actual machine does not always bear the same result as designed because of a difference of the screw diameters between the experimental machine and the actual machine, and the like.

The present invention is devised to solve the above-described problem, and has for its object to provide an extruder capable of obtaining a treatment volume equal to that of the conventional art without increasing a screw diameter.

GB-A-1 033 669 relates to an apparatus for carrying out a slowly progressing chemical reaction which involves at least one substance which is at least partly in the liquid phase, and is particularly but not exclusively applicable to the case where the chemical reaction is a polymer reaction such as, for example, poly-condensations as used in the production of poly-esters.

US-A-3 525 124 refers to an extracting apparatus for processing synthetic materials including extracting eliminable components, comprising at least a pair of threaded shafts rotatably mounted in the housing each shaft having at least two conveying and milling sections and an obstructing section therebetween. Provisions are made for heat treating and applying pressure on the material in the sections independently of one another. The space between the root of the screw threads in the conveying and milling sections and the inside of the housing diminishes in the direction of flow of material.

EP-A2-1 063 075 relates to a compact extruder with multiple parallel screws, comprising an outer casing which comprises at least two chambers; said chambers each contain at least two screws which allow material to flow from one chamberto the other through a passage, and present a feed inlet for the material to be treated by the extruder and an outlet for the said material; said extruder providing that each chamber is constituted by at least one pair of housings for the corresponding pair of screws which engage with one another, each screw presenting a long-pitch portion and a shorter-pitch portion; wherein said at least two screws are intermeshed to each other inside each chamber, said chambers being positioned parallel to each other and provided inside the same housing by means a partition wall on which is placed said passage, and at least one of the screws in each set of screws is associated with differentials via cogwheels that are fitted to the shafts of the said screws and exit from the said differentials and in that said short-pitch portion has a variable pitch and its sections are provided with opposite threads.

US-A-2 508 495 relates to an extrusion process for shaping plastic and like substances, wherein the substances to be treated are fed through an adequately heated casing, from the charging opening to the outlet opening, in a gradually decreasing space.

US-A-2 802 238 relates to a screw press, wherein the screw press comprises a central multiple-thread screw, a plurality of lateral screws having a smaller number of threads than the central screw and meshing with said central screw, and a casing closing the screw.

US-A-4 131371 relates to a screw processor having multiple fully intermeshed CO-rotating-phase screws each provided with equal numbers of threads, each of said screws having longitudinally staged eccentric cross-sections preselected so that at least one thread of each screw spreads process material over the barrel bore and at least one other thread of each screw collects said process material and transfers it to a CO-acting screw, which thereupon repeats the spreading-collecting-transfer cycle.

SU-A1-1199 625 refers to a system having two screws.

JP 61 242822 A refers to a two-axial extruding machine which is so constituted that a partial gearing zone having a constant gearing gap is provided in a partial section of self-wiping complete gearing two-axial screws as for a shape of the screw of the zone, the number of flights of the same is made fewer than that of the complete gearing zone and as for an imaginary center distance obtained by deducting the gearing gap from a center distance of two axes, gearing becomes self-wiping gearing. As for a partial gearing zone, as the two-axial screws possess a gearing gap always even at any revolving position, raw materials are mixed up complicatedly with each other through the gap according to a rotation of the screw.

DE 103 57 578 A1 refers to a method and apparatus for producing an injection molding part from a thermoplastic material.

JP 61035 775 A relates to a food extrusion forming machine. The kneading zone-(kneader) of the extrusion forming machine is composed of three shafts, three multi-segment screws each provided with various segments different in the shape and pitch and fitting with the shaft, the cylinder enclosing said shafts and screws, and if necessary a heater. The pastry material for food such as cake, etc. is charged through the material inlet into the cylinder, lowered to the transferring and crushing zone composed of a single-shaft screw, cracked and transferred to the cylinder of the kneader, added with necessary water, colorant, flavor, seasoning, etc. from the additive feeder in the course of the crushing, kneading, and heating process with the screws, and the kneaded material is extruded through the hole of the replaceable nozzle having desired profile.

JP 62 286 708 A refers to a kneading machine. The kneading machine receives repeating compression action and a developing action in the direction of the center of a shaft by a recession and protrusion in a kneading part. Therefore, it becomes that raw materials in each of recessions are compressed and developed by strong force, and a part of the raw materials is flowed backward forcibly in the reverse direction of a transfer directions, as protrusions of one side screw are positioned at recessions of the other side screw. Moreover, a back flow is comparatively much and kneading is performed by repeating transfer, distribution, mixing and a back flow while decompression is being repeated. Thus, a dispersion, agitation and kneading effect is improved drastically by forming unevenness along the spiral on the whole surface of the outside circumferential surface of a multiple flight spiral by eliminating a flight part of a conventional screw in a kneading part.

JP-A-6 031 725 relates to a four screw extruder. A first rotor having a first blade and a first screw, and a second rotor having a second blade and a second screw are arranged adjacently In parallel, a third rotor having a third blade Is arranged outside the rotor, a fourth rotor having a fourth blade is arranged outside the rotor, and four-shaft rotors are respectively engaged by gears. Material introducing ports are respectively provided on the blades. The blades are cooperated, and the blades are cooperated to be rotatably driven in a direction for introducing a material.

US-A-5 716 159 refers to a tooth-profile shaped spline convenient to rotary elements of a multi spindle extruder is provided. The spline has a tooth profile which can be provided by deforming a continuous curve as if the x-axis ran on a center circle of predetermined radius. This continuous curve before deformation is a continuous line obtained by connecting a semicircular or semi-oval line, the line being represented by an expression of x²/a²+y2/b2=1 in a defined area of y≥0 with another semi-circular or semi-oval line, the another line being represented by the expression of x²/a²+y²/b²=1 in a defined area of y≤0 by turns.

Document DE 196 22 682 A1 discloses an extruder, comprising a plurality of screws with the same diameter and the same root diameter in a waveform shape; a drive unit which is configured to rotate all of the screws at the same velocity in the same direction; and a barrel with a screw fitting part in which all of the screws are inserted rotatably and which is configured to knead and move an extrusion material present in a thread groove of the screw to a thread groove of the adjacent screw through rotation of the screws by the drive unit, all of the screws inserted in the screw fitting part being disposed so as to engage tightly with each other while clearances each between the thread groove of one of the engaged screws and a crest of the other of the engaged screws are made constant, and at the same time, the clearances and a clearance between the crest of the screw and an inner face of the barrel are made so narrow as to reduce leakage of the extrusion material for whole of the adjoining screws, wherein the extruder is adapted for moving the extrusion material transferring the thread grooves of all of the screws along the inner face of the barrel in a direction intersected with a direction along the longitudinal center axes by the rotation of the screws in the same direction.

By having screws arranged in a circular fashion, the extruder of DE 196 22 582 A1 is able to process materials of high viscosity. This particular arrangement is advantageous due to an even distribution of pressure within the circular space. However, extrusion material of high mass density will tend to flow downwards in the extruder of DE 196 22 582 A1 because of the larger difference between highest inner surface and lowest inner surface thereof.

### DISCLOSURE OF INVENTION

An extruder of the first aspect of the present invention comprises:
three or more screws with the same diameter and the same root diameter in a waveform shape, which are engaged with each other and arranged in parallel to each other horizontally or nearly horizontally while a size between axial centers of the screws is made equal;
a drive unit which is configured to rotate all of the screws at the same velocity in the same direction; and
a barrel with a screw fitting part in which all of the screws are inserted rotatably and which is configured to knead and move an extrusion material present in a thread groove of the screw to a thread groove of the adjacent screw through rotation of the screws by the drive unit,
all of the screws inserted in the screw fitting part being disposed so as to engage tightly with each other while clearances each between the thread groove of one of the engaged screws and a crest of the other of the engaged screws are made constant, and at the same time, the clearances and a clearance between the crest of the screw and an inner face of the barrel are made so narrow as to reduce leakage of the extrusion material for whole of the adjoining screws,
The extruder is adapted for moving the extrusion material transferring the thread grooves of all of the screws along the inner face of the barrel in a direction intersected with a direction along the longitudinal center by the rotation of the screws in the same direction.

The extruder may be designed so that the diameter of the screw is 50 mm or smaller.

The extruder may be designed so that the extruder further includes a molding section attached to the barrel for molding the extrusion material extruded by the screws.

The extruder may be designed so that the screw fitting part has switching portions configured to switch a moving direction of the extrusion material so as to improve kneadability of the extrusion material when the extrusion material present in the thread groove of the screw is moved to a thread groove of the adjacent screw, the extrusion material being moved transferring all of the switching portions formed in the screw fitting part along the inner face of the barrel by the rotation of the screws in the same direction.

The extruder may be designed so that the screws are arranged with a shift of every 90 degrees between a crest of one screw and a crest of the adjacent other screw when the screws are formed by a two-thread screw.

An extruder according to the first aspect of the present invention includes screws, a drive unit and a barrel. Three or more screws are installed, each formed in a waveform shape with the same diameter and the same root diameter. The screws are engaged with each other while a distance between axial centers of the screws is made equal, and are arranged in parallel to each other horizontally or nearly horizontally. According to the configuration, a treatment volume equal to that of the conventional extruder can be handled by screws with a small diameter as compared with the conventional one. Using the screws with the small diameter as compared with the conventional one can eliminate conventional various kinds of trouble such as a change of a screw peripheral velocity, temperature unevenness of a material for extrusion in screw grooves, leakage of the material for extrusion from screws and a setting area of the extruder.

Further because of attaching the molding section, the extrusion material extruded by the screws can be molded.

### BRIEF DESCRIPTION OF THE DRAWINGS

Fig. 1 is a plan view of screws installed in an extruder of an embodiment of the present invention;
Fig. 2 is a sectional view of the screws shown in Fig. 1;
Fig. 3 is a side view of the extruder of the embodiment of the present invention;
Fig. 4 is a diagram for explaining a state in which a material for extrusion is transferred by the screws shown in Fig. 1;
Fig. 5 is a diagram for explaining a state in which the material for extrusion is transferred by the screws shown in Fig. 1;
Fig. 6 is a diagram for explaining a state in which the material for extrusion is transferred by the screws shown in Fig. 1;
Fig. 7 is a diagram for explaining a route whereby the material for extrusion is transferred in a barrel by the screws shown in Fig. 1;
Fig. 8 is a diagram for explaining an arrangement example of four screws;
Fig. 9 is a diagram for explaining an arrangement example of the four screws;
Fig. 10 is a diagram for explaining a flight angle at the screw;
Fig. 11 is a diagram showing a structure of a reduction gear installed in a drive unit shown in Fig. 3;
Fig. 12 is a diagram showing a constitution of a conventional extruder;
Fig. 13 is a diagram indicative of a form example of screws installed in the extruder shown in Fig. 12;
Fig. 14 is a diagram indicative of a form example of screws installed in the extruder shown in Fig. 12;
Fig. 15 is a diagram indicative of a form example of screws installed in the extruder shown in Fig. 12;
Fig. 16 is a sectional view of a conventional extruder with multiple screws;
Fig. 17 is a diagram for explaining each part in a conventional twin-screw; and
Fig. 18 is a diagram showing a structure of a cutting device connectible to the extruder shown in Fig. 3.

### BEST MODE FOR CARRYING OUT THE INVENTION

An extruder as an embodiment of the present invention will be described below with reference to the drawings. It is to be noted that like parts are designated by like reference numerals through the drawings.

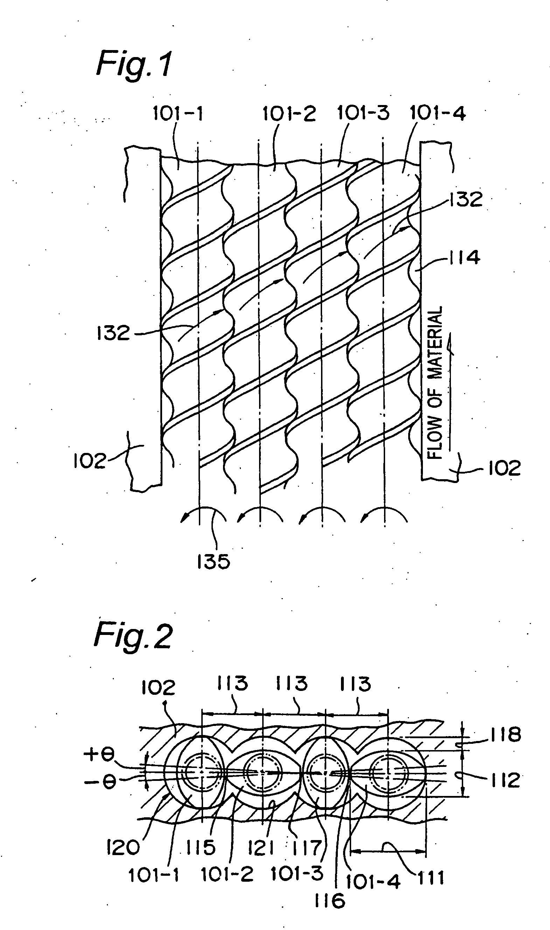

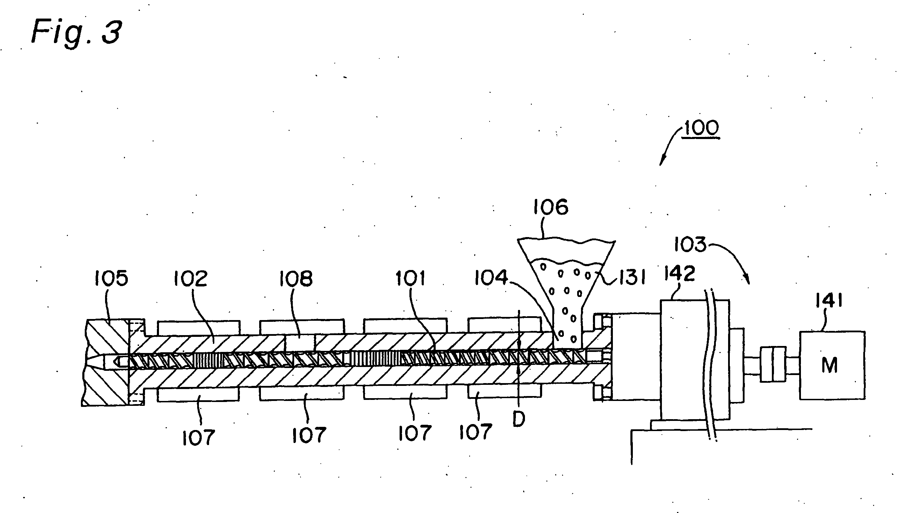

As shown in Fig. 3, an extruder 100 of the embodiment includes screws 101, a barrel 102 and a drive unit 103, and can further be equipped with a die 105 which corresponds to a molding section. In the present embodiment, the barrel 102 has a material supply part 104 for a material 131 for extrusion, a vent part 108 as an air vent part for the material 131 transferred by the screws 101, and a heating/cooling device 107 for heating or cooling the material 131. Fig. 1 shows a form in which a hopper 106 for storing the material 131 is attached to the material supply part 104. However, the extruder 100 is not limited to this form and can be of a form with another extruder connected thereto for forcibly or quantitatively supplying the material 131 to the material supply part 104. An example of the material 131 for extrusion is a mixture in a solid state of plastic and a filler. The solid state is, for instance, a state of pellets or powder.

According to the embodiment and as indicated in Figs. 1 and 2, the screws 101 comprises four screws 101-1 to 101-4 each of a waveform shape with the same diameter 111, the same root diameter 112, and the same ratio of the diameter 111 and the root diameter 112. The screws 101-1 to 101-4 are engaged with each other and arranged in parallel to each other horizontally or nearly horizontally while a size 113 between mutual axial centers is made equal. The aforementioned "nearly horizontally" means a positional deviation of each of the screws 101-1 to 101-4 within ± θ degrees with respect to a horizontal axis centering a central part in a horizontal direction of the four screws 101-1 to 101-4. Specifically, the above θ is 5 degrees, preferably 3 degrees.

Although four screws 101 are arranged in the present embodiment as described hereinabove, the present invention is not limited to this, and three or more screws can be installed.

Since it is preferable that no change is generated in the screw diameter between the experimental machine and the actual machine as discussed earlier, and also from a viewpoint of making a depth 118 of a screw groove 114 shallow as will be described later, the diameter 111 of each of the screws 101 is preferably not larger than 50 mm. From this viewpoint, each screw 101 having the diameter 111 of, e.g., approximately 12-15 mm can be used. In an exceptional case, three or more screws 101 having the diameter 111 of, for instance, approximately 150 mm are arranged.

The barrel 102 has an inner face 121 which forms a screw fitting part 120. The screw fitting part 120 has a shape so that all of the screws 101-1 to 101-4 can be fitted rotatably under the above-described arrangement condition, specifically, a shape with a plurality of gourds coupled along the horizontal direction.

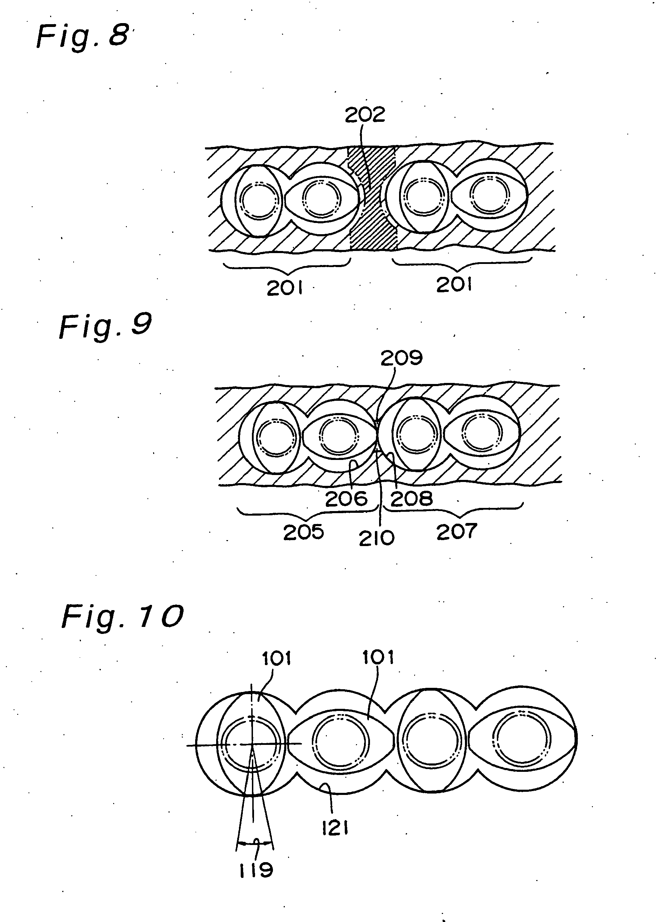

In the case of designing a barrel for storing four screws on the basis of a conventionally existing barrel for storing two screws, two methods can be considered, namely, a method of arranging two sets each having two screws 201, with a clearance 202 formed between the sets as shown in Fig. 8, and a method of arranging one screw set 205 and the other screw set 207 so that a barrel inner face 206 for storing the one screw set 205 and a barrel inner face 208 for storing the other screw set 207 contact with each other in a tangent direction as shown in Fig. 9. In the case shown in Fig. 8, however, the clearance 202 marked by oblique lines and its adjoining region should be heated and cooled more than the other parts in the barrel because of the need of heating or cooling the material 131 at each of the screw sets 205 and 207, thereby causing the barrel to be large. On the other hand, in the case shown in Fig. 9, edge portions 209 and 210 of the barrel present at contact parts between the inner face 206 and the inner face 208 should be removed to prevent the edge portions 209 and 210 from being broken. As a result, the removed portions become dead spots to collect the material, leading to a problem of thermal degradation of the material, or the like.

As such, according to the present embodiment as shown in Fig. 2, the screws 101-1 to 101-4 are arranged so that a clearance 115 between a root of the screw 101-1 and a crest of the screw 101-2, a clearance 116 between a root of the screw 101-3 and a crest of the screw 101-4, and a clearance 117 between a crest of the screw 101-2 and a root of the screw 101-3 become all equal to each other.

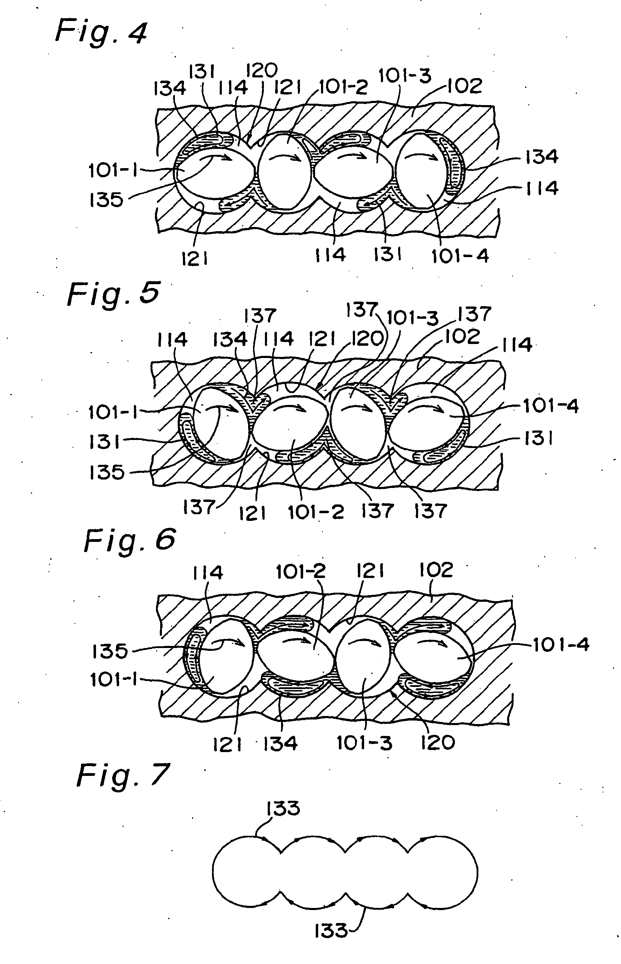

The screw fitting part 120 as above kneads the material 131 present in the thread groove 114 of each of the screws 101-1 to 101-4 through the rotation of the screws 101 by the drive unit 103 in a direction of an arrow 135 as indicated in Figs. 4-7. In other words, the material 131 present in each thread groove 114 is rotated and kneaded within the thread groove 114 as designated by an arrow 134 through the rotation of the screws 101. Each material 131 while being kneaded is moved to the thread groove 114 of the adjoining screws 101 in a direction of an arrow 132 indicated in Fig. 1. In the whole of the screw fitting part 120 in the barrel 102, the material 131 is moved while being kneaded in a sequence from the screw 101-1 to the screw 101-2 to the screw 101-3 to the screw 101-4 to the screw 101-3 to the screw 101-2 to the screw 101-1 along the shape of the inner face 121 as indicated by an arrow 133 in Fig. 7.

By including the barrel 102 having the screw arrangement and the inner face 121 as shown in Fig. 2, a filling situation and a kneading state of the material 131 can be made equal at each of the screws 101-1 to 101-4.

Supposed that an extrusion amount of the material 131 is kept the same as in the conventional case having a large diameter and two screws, if a section in a diametrical direction of the screw is made geometrically similar to that of the twin-screw and the number of screw is made three or more, the diameter of the screw can be made small as compared with the conventional art and the depth 118 of the thread groove 114 of the screw can be made shallow. Accordingly, a surface length and a barrel inner face length of the screws 101 become long as compared with the conventional art. The number of position change times of the material 131 is increased because of the above increase of the surface length and the inner face length in comparison with the conventional art, so that a kneadability of the material 131 can be improved in comparison with the case of the conventional twin-screw extruder having the large diameter of the screw.

Further, since the depth 118 of the thread groove 114 is rendered shallow owing to the reduction of the screw diameter 111, temperature irregularities at the material 131 present in one thread groove 114 are reduced. Particularly when the material has a large self-heating value, the self-heating value can be decreased because the screw diameter 111 can be reduced. According to the extruder 100 of the embodiment, the extrusion amount of the material 131 can be controlled by the number of the screws 101 in a state while a change of physical properties of the material 131 is lessened more.

The above reduction of the screw diameter saves energy and can reduce mechanical loss, which is suitable for small production in a variety of kinds and improves the operability.

Since also the barrel 102 is made compact by the reduction of the screw diameter 111, heat conduction of heating and cooling to the barrel 102 can be improved.

In addition, since the thread grooves 114 of the screw 101 communicate with the material supply part 104 and the vent part 108, and the depth 118 of the thread groove 114 is shallow as described above, air vent from the material 131 is facilitated.

The reduction of the screw diameter 111 increases the flight angle 119 of each screw 101. More specifically, the flight angle can be approximately 20 degrees or larger. Therefore, in comparison with a case where the screw diameter is increased, the abrasion resistance between screws 101 can be improved while the same treatment volume is secured, and at the same time, a leak amount of the material 131 from the screws 101 can be reduced. A lead of each of the screws 101 is shortened by the reduction of the screw diameter 111 and the increase of the flight angle 119, and consequently the extrusion amount of the material 131 is reduced. However, the reduced amount can be compensated by increasing the number of screws 101.

According to the extruder 100 of the present embodiment as above, the diameter 111 of each screw 101 can be reduced by controlling the extrusion amount of the material 131 by the number of the screws 101, and this reduction can solve conventional various kinds of trouble such as the change of the screw peripheral velocity, temperature irregularities of the material 131 in the screw groove 114, leakage of the material 131 from the screws 101, an installation area of the extruder 100 and the like. Moreover, since the number of the screws 101 can be increased in conformity with a target extrusion amount, the screw groove 114 can be made shallow by the increase of the screw as above, and the temperature irregularities of the material 131 can be improved, thus enabling molding of the material improved in heating/cooling efficiency. The larger the screw number is made, the more portions the screws are engaged with each other at. Therefore, the heating/cooling efficiency can be enhanced as above while the self-cleanability of the screws 101 is maintained.

In the above embodiment, the shape of each of screws 101 is exemplified by a two-thread screw. The same effect as above can be obtained by a single-thread screw or three-thread screw. The shape of each of the screws 101 is changeable from viewpoints of the abrasion of the screw and the leakage of the material 131 from an outer circumferential part of each of the screws 101.

The foregoing description is based on the assumption that the material 131 never leaks from a gap between the screws 101 and the barrel 102 except the case related to leakage of the material 131 because of the change of the flight angle 119.

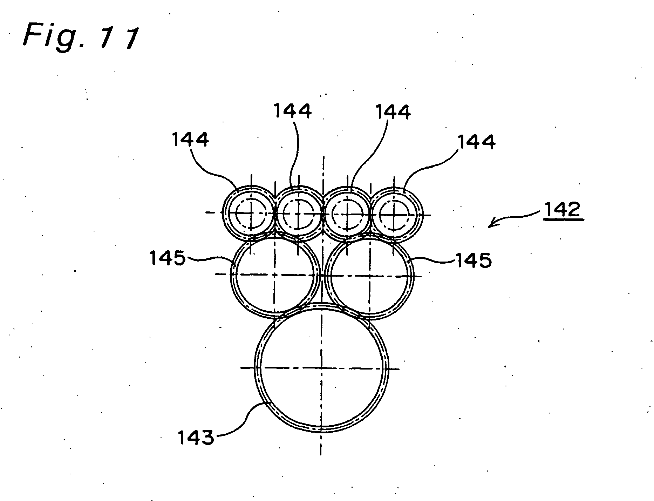

The drive unit 103 will be described. The drive unit 103 is equipped with, as shown in Fig. 1, a motor 141 as a driving source for rotating the screws 101, and a reduction gear 142 with the motor 141 connected thereto which decelerates and transmits the rotation of the motor 141 to the screws 101. As shown in Fig. 11, the reduction gear 142 has one input gear 143 connected to the motor 141, four screw drive gears 144 connected to the screws 101-1 to 101-4 respectively, and two idle gears 145 which couple the above input gear 143 and the screw drive gears 144 with each other. A stage number and a reduction gear ratio of gears for driving the screw 101 are equal for each of the screws 101-1 to 101-4 in the reduction gear 142. The stage number and the reduction gear ratio of gears for driving each screw are adjusted so as to become equal to each other by the idle gears even when the number of the screw exceeds four.

The stage number of gears for driving each of the screws 101-1 to 101-4 becomes two by using the reduction gear 142 of the above configuration, so that a difference of cumulated backlash of gears can be reduced. A clearance between flights of the screws 101 can be narrowed, and accordingly the leak of the material 131 from the screws 101 can be reduced.

A comparison between an example of the extruder 100 of the present embodiment with the above-described configuration, and the conventional extruder will be discussed below.

In the conventional twin-screw extruder, the treatment volume of 50 kg/hour of the material 131 which includes PP (polypropylene), rubber and talc is obtained at a molding temperature of 210 degrees and by rotating the screw by 400 rpm while the screw diameter is 40 mm and the L/D is 30. In a case where the same treatment volume is to be handled by the extruder 100 of the embodiment, the extruder comes to be equipped with four screws 101 of the diameter of 30 mm, and the L/D is made 30. Since the screws 101 are made geometrically equal to the conventional one of the screw diameter of 40 mm, therefore a total length of the screw 101 is shortened from 1200 mm to 900 mm. In other words, a total length of the extruder 100 can be reduced by 33%, and a screw weight can be reduced by approximately 18%, an installation area can be reduced, heat energy by the heater or the like can be reduced because of a reduction of a heating/cooling zone.

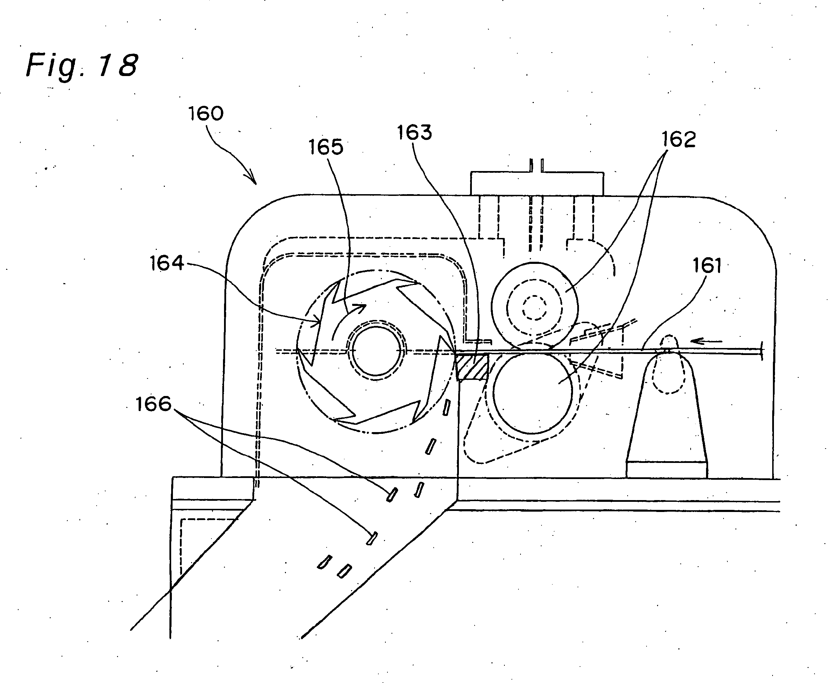

A working device for working objects molded by the die 105 can be connected to a discharge side of the die 105. When the material 131 is molded by the die 105 into, e.g., a cylindrical shape, an example of the working device includes a water bath for cooling the object molded by the die 105, and a cutting device 160 shown in Fig. 18 for cutting the molded object which passes the water bath to a constant length. The product cut by the cutting device 160 becomes, for example, a pellet shape of a diameter of approximately 3 mm and a length of approximately 3 mm.

The cutting device 160 has rollers 162 for further shaping the shape of the molded object 161 cooled in the water bath, a fixed blade 163 and a rotary blade 164. The molded object 161 supplied continuously from the roller 162 onto the fixed blade 163 is cut by the rotary blade 164 which is rotating in a direction of an arrow 165, to be the product 166.

In the above description, the extruder 100 of the embodiment is described to be able to obtain the same treatment volume as that of the conventional twin-screw extruder with the large diameter. When the treatment volume is compared between the extruder 100 of the present embodiment having four screws 101 of the same diameter as the screw diameter of the conventional twin-screw extruder, and the conventional twin-screw extruder, although the treatment volume is apparently considered to be double since the number of screws is twice as many, the extruder 100 of the present embodiment can actually achieve approximately 2.5 to 3 times a throughput of the conventional extruder. The reason for this is considered as follows. As shown in Figs. 4-7, the material 131 moves in each groove 114 in the direction denoted by the arrow 133. At this time, surfaces of adjacent screws 101 shift in opposite directions as indicated by arrows at portions where grooves 114 formed by adjacent screws 101 intersect, for instance, at V-shaped portions marked by a reference numeral 137 in Fig. 5. In consequence, moving direction of the material 131 is switched in the V-shape as is made clear by the arrows, and a shear rate is further increased. A meltability and a kneadability of the material 131 are improved by effects produced by the switching of the moving direction. That is, the meltability and the kneadability can be improved by increasing the number of the V-shaped portions 137. There are six V-shaped portions 137 present in the extruder 100 of the embodiment, whereas there are two V-shaped portions in the conventional twin-screw extruder.

Additionally, as shown in Fig. 2, in each screw 101, two clearances between the crests and the inner face 121 of the barrel 102, and the clearance 115 to the adjacent screws 101, i.e., a total of three clearances are designed considerably narrow in comparison with the conventional machine. Hence the screws 101 are engaged tightly with each other, and an effect of scraping the material 131, so-called wiping effect at surfaces of the engaged counterpart screws 101 is enhanced greatly. Thus since leakage of the material 131 from each part is reduced, the throughput is increased.

Because of the above-described switching effect and the wiping effect, it can be said that the extruder 100 of the present embodiment can achieve approximately 2.5 to 3 times the throughput of the conventional extruder.

Any suitable combination of the above various embodiments can exert respective effects.

Although the present invention has been fully described in connection with the preferred embodiment thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. An extruder, which comprises:
three or more screws (101) with the same diameter (111) and the same root diameter (112) in a waveform shape, which are engaged with each other and arranged in parallel to each other horizontally or nearly horizontally while a size between axial centers of the screws is made equal;
a drive unit (103) which is configured to rotate all of the screws at the same velocifiy in the same direction; and
a barrel (102) with a screw fitting part (120) in which all of the screws are inserted rotatably and which is configured to knead and move an extrusion material (131) present in a thread groove (114) of the screw to a thread groove of the adjacent screw through rotation of the screws by the drive unit,
all of the screws inserted in the screw fitting part being disposed so as to engage tightly with each other while clearances (115, 116 and 117) each between the thread groove of one of the engaged screws and a crest of the other of the engaged screws are made constant, and at the same time, the clearances and a clearance between the crest of the screw and an inner face (121) of the barrel are made so narrow as to reduce leakage of the extrusion material for whole of the adjoining screws,
wherein the extruder is adapted for moving the extrusion material transferring the thread grooves of all of the screws along the inner face of the barrel in a direction intersected with a direction along the longitudinal center axes by the rotation of the screws in the same direction.

2. The extruder according to Claim 1, wherein the diameter of each of the screws is 50 mm or smaller.

3. The extruder according to Claim 1, which further comprises a molding section (105) installed to the barrel and configured to mold the extrusion material extruded by the screws.

4. The extruder according to Claim 2, which further comprises a molding. section (105) installed to the barrel and configured to mold the extrusion material extruded by the screws.

5. The extruder according to Claim 1, wherein the screw fitting part has V-shaped portions (137) configured to switch a moving direction of the extrusion material so as to improve kneadability of the extrusion material when the extrusion material present in the thread groove of the screw is moved to a thread groove of the adjacent screw, wherein the extruder is adapted for moving the extrusion material transferring all of the V-shaped portions formed in the screw fitting part along the inner face of the barrel by the rotation of the screws in the same direction.

6. The extruder according to Claim 1, wherein the screws are arranged with a shift of every 90 degrees between a crest of one screw and a crest of the adjacent other screw when the screws are formed by a two-thread screw.

## Patentansprüche

1. Extruder, der Folgendes umfasst:
drei oder mehr Schrauben (101) mit demselben Durchmesser (111) und demselben Fußkreisdurchmesser (112), in einer Wellenform angeordnet, welche miteinander in Eingriff stehen und horizontal oder nahezu horizontal parallel zueinander eingerichtet sind, während eine Abmessung zwischen axialen Mittelpunkten der Schrauben so gewählt ist, dass diese gleich ist;
eine Antriebseinheit (103), die konfiguriert ist, um alle Schrauben in derselben Geschwindigkeit in derselben Richtung zu drehen; und
ein Gehäuse (102) mit einem Schrauben-Passstück (120), in dem alle Schrauben rotierbar eingeführt sind und welches konfiguriert ist, um ein Extrusionsmaterial (131), das in einer Gewinde-Nut (114) der Schraube vorhanden ist, zu einer Gewinde-Nut der angrenzenden Schraube - durch eine Rotation der Schrauben mittels der Antriebseinheit - zu formen und zu bewegen,
wobei alle Schrauben, die in dem Schrauben-Passstück eingeführt sind, so eingerichtet sind, um eng ineinander zu greifen, während Abstände (115, 116 und 117) - jeweils zwischen der Gewinde-Nut von einer der in Eingriff befindlichen Schrauben und einem Gewinde-Scheitelpunkt von der anderen der in Eingriff befindlichen Schrauben - konstant gebildet sind, und gleichzeitig die Abstände und ein Abstand zwischen dem Gewinde-Scheitelpunkt der Schraube und einer Innenfläche (121) des Gehäuses so eng gebildet sind, um ein Austreten des Extrusionsmaterials für alle angrenzenden Schrauben zu reduzieren,
wobei der Extruder geeignet ist, um das Extrusionsmaterial - durch das Versetzen der Gewinde-Nuten aller Schrauben entlang der Innenfläche des Gehäuses - in einer Richtung zu bewegen, welche sich mit einer Richtung entlang der längs verlaufenden Mittelachse überschneidet, durch die Rotation der Schrauben in derselben Richtung.

2. Extruder nach Anspruch 1, wobei der Durchmesser von jeder der Schrauben 50 mm oder kleiner ist.

3. Extruder nach Anspruch 1, welcher ferner einen Formungsabschnitt (105) umfasst, der an dem Gehäuse eingerichtet ist und konfiguriert ist, um das Extrusionsmaterial zu formen, welches durch die Schrauben extrudiert ist.

4. Extruder nach Anspruch 2, welcher ferner einen Formungsabschnitt (105) umfasst, der an dem Gehäuse eingerichtet ist und konfiguriert ist, um das Extrusionsmaterial zu formen, welches durch die Schrauben extrudiert ist.

5. Extruder nach Anspruch 1, wobei das Schrauben-Passstück V-förmige Abschnitte (137) aufweist, konfiguriert, um eine Bewegungsrichtung des Extrusionsmaterials zu ändern, um eine Formbarkeit des Extrusionsmaterials zu verbessern, wenn das Extrusionsmaterial, welches in der Gewinde-Nut der Schraube vorhanden ist, zu einer Gewinde-Nut der angrenzenden Schraube bewegt wird, wobei der Extruder geeignet ist, um das Extrusionsmaterial zu bewegen, durch das Versetzen aller V-förmigen Abschnitte, die in dem Schrauben-Passstück entlang der Innenfläche des Gehäuses gebildet sind, durch die Rotation der Schrauben in derselben Richtung.

6. Extruder nach Anspruch 1, wobei die Schrauben mit einer Verlagerung von jeweils 90 Grad zwischen einem Gewinde-Scheitelpunkt von einer Schraube und einem Gewinde-Scheitelpunkt der angrenzenden anderen Schraube eingerichtet sind, wenn die Schrauben durch eine Doppelgewindeschraube gebildet sind.

## Revendications

1. Extrudeuse, qui comprend :
trois vis (101) ou plus avec le même diamètre (111) et le même diamètre de pied (112) de forme ondulée, en prise les unes avec les autres et disposées parallèlement les unes aux autres de façon horizontale ou quasi horizontale tandis que les axes centraux des vis sont situés à égale distance les uns des autres ;
un dispositif d'entraînement (103) qui est agencé pour mettre en rotation toutes les vis à la même vitesse dans la même direction ; et
un fourreau (102) avec une partie de fixation (120) de vis dans laquelle toutes les vis sont placées de façon rotative et qui est agencé pour pétrir et pour déplacer une matière à extruder (131) présente dans une rainure de filetage (114) de la vis vers une rainure de filetage de la vis adjacente par la rotation des vis par le dispositif d'entraînement,
toutes les vis placées dans la partie de fixation de la vis étant disposées de sorte à ce qu'elles s'engagent de façon étroite les unes dans les autres tandis que les espaces libres (115,116 et 117), chacun entre la rainure de filetage de l'une des vis engagées et une crête de l'autre des vis engagées, sont rendues constantes et simultanément, les espaces libres et un espace libre entre la crête de la vis et une face interne (121) du fourreau sont rétrécis au point de réduire la fuite de la matière à extruder pour l'ensemble des vis adjacentes,
dans laquelle l'extrudeuse est conçue pour déplacer la matière à extruder en transférant les rainures de filetage de toutes les vis le long de la face interne du fourreau dans une direction coupant une direction le long des axes centraux longitudinaux par la rotation des vis dans la même direction.

2. Extrudeuse selon la revendication 1, dans laquelle le diamètre de chacune des vis est inférieur ou égal à 50 mm.

3. Extrudeuse selon la revendication 1, qui comprend en outre une section (105) de moulage placée dans le fourreau et agencée pour mouler la matière à extruder extrudée par les vis.

4. Extrudeuse selon la revendication 2, qui comprend en outre une section (105) de moulage placée dans le fourreau et agencée pour mouler la matière à extruder extrudée par les vis.

5. Extrudeuse selon la revendication 1, dans laquelle la partie de fixation de vis comporte des parties (137) en forme de V agencées pour changer de sens de déplacement de la matière à extruder de sorte à améliorer la capacité de pétrissage de la matière à extruder lorsque, la matière à extruder présente dans la rainure de filetage de la vis est déplacée vers une rainure de filetage de la vis adjacente, dans laquelle l'extrudeuse est conçue pour déplacer la matière à extruder en transférant toutes les parties en forme de V formées dans la partie de fixation de vis le long de la face interne du fourreau par la rotation des vis dans la même direction.

6. Extrudeuse selon la revendication 1, dans laquelle les vis sont disposées avec un décalage tous les 90° entre une crête d'une des vis et une crête de l'autre vis adjacente lorsque, les vis sont formées par une vis à deux filets.
